(19) Europäisches Patentamt / European Patent Office / Office européen des brevets

(11) **EP 3 890 993 B1**

(12) **FASCICULE DE BREVET EUROPEEN**

(45) Date de publication et mention de la délivrance du brevet:
**15.02.2023 Bulletin 2023/07**

(21) Numéro de dépôt: **19868233.8**

(22) Date de dépôt: **02.12.2019**

(51) Classification Internationale des Brevets (IPC):
**B60C 9/20** *(1968.09)*  **B60C 9/26** *(1985.01)*

(52) Classification Coopérative des Brevets (CPC):
**B60C 9/263; B60C 9/20; B60C 9/2006; B60C 9/26;**
B60C 2200/065

(86) Numéro de dépôt international:
**PCT/FR2019/052876**

(87) Numéro de publication internationale:
**WO 2020/115409 (11.06.2020 Gazette 2020/24)**

(54) **PNEUMATIQUE POUR VEHICULE DE GENIE CIVIL, COMPRENANT UNE ARMATURE DE SOMMET A RENFORTS METALLIQUES TRANCANNEE**

REIFEN FÜR EIN TIEFBAUFAHRZEUG MIT EINER LAGENGEWICKELTEN KRONENVERSTÄRKUNG MIT METALLVERSTÄRKUNGEN

TYRE FOR A CIVIL ENGINEERING VEHICLE, COMPRISING A LEVEL-WOUND CROWN REINFORCEMENT WITH METAL REINFORCEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2018 FR 1872337**
**04.02.2019 FR 1901036**

(43) Date de publication de la demande:
**13.10.2021 Bulletin 2021/41**

(73) Titulaire: **COMPAGNIE GENERALE DES ETABLISSEMENTS MICHELIN**
**63000 Clermont-Ferrand (FR)**

(72) Inventeur: **BARBARIN, François**
**63040 CLERMONT-FERRAND CEDEX 9 (FR)**

(74) Mandataire: **Millanvois, Patrick Jacques Jean**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
EP-A1- 2 199 108     EP-A1- 2 202 095
WO-A1-2015/124758    WO-A1-2018/091802
FR-A1- 2 999 984

**Description**

La présente invention a pour objet un pneumatique destiné à équiper un véhicule de Génie Civil et concerne plus particulièrement son armature de sommet.

Typiquement un pneumatique pour véhicule de Génie Civil, au sens de la norme de la European Tyre and Rim Technical Organisation ou ETRTO, est destiné à être monté sur une jante dont le diamètre est au moins égal à 25 pouces et peut atteindre 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieure signifient «plus proche », respectivement «plus éloigné de l'axe de rotation du pneumatique». Par «axialement intérieurs, respectivement «axialement extérieurs, on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique comprend également une armature de renforcement, constituée d'une armature de sommet, radialement intérieure à la bande de roulement, et d'une armature de carcasse, radialement intérieure à l'armature de sommet.

L'armature de carcasse d'un pneumatique pour véhicule de Génie Civil comprend habituellement au moins une couche de carcasse comprenant des renforts généralement métalliques, enrobés par un matériau polymérique de type élastomère ou élastomérique, obtenu par mélangeage et appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Pour un pneumatique radial, les renforts métalliques d'une couche de carcasse sont sensiblement parallèles entre eux et forment, avec la direction circonférentielle, un angle compris entre 85° et 95°.

L'armature de sommet d'un pneumatique pour véhicule de Génie Civil comprend une superposition de couches de sommet s'étendant circonférentiellement, radialement à l'extérieur de l'armature de carcasse. Chaque couche de sommet est constituée de renforts généralement métalliques, parallèles entre eux et enrobés par un matériau polymérique de type élastomère ou mélange élastomérique d'enrobage.

En ce qui concerne les renforts métalliques, un renfort métallique est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements respectivement structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité intrinsèque du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite élastique, du métal de ces fils métalliques pris individuellement. Ces différents allongements ainsi que leurs significations respectives, bien connus de l'homme du métier, sont décrits, par exemple, dans les documents US5843583, WO2005/014925 et WO2007/090603.

On définit également, en tout point de la courbe force-allongement d'un renfort métallique, un module en extension, exprimé en GPa, qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques et les renforts métalliques non extensibles ou inextensibles. Dans ce qui suit, les caractéristiques relatives aux renforts métalliques sont déterminées sur des renforts métalliques, enrobés dans un mélange élastomérique vulcanisé. Un renfort métallique élastique est caractérisé par un allongement structural As au moins égal à 0.5%. En outre, un renfort métallique élastique a un module élastique en extension au plus égal à 150 GPa, et compris usuellement entre 40 GPa et 150 GPa. Un renfort métallique non extensible est caractérisé par un allongement total At, sous une force de traction égale à 10% de la force à rupture Fm, au plus égal à 0.2%. Par ailleurs, un renfort métallique non extensible a un module élastique en extension compris usuellement entre 150 GPa et 200 GPa.

Concernant les couches de sommet de l'armature de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent deux couches de protection, radialement superposées, formées de renforts métalliques élastiques, parallèles entre eux dans chaque couche et croisés d'une couche à la suivante, en formant, avec la direction circonférentielle, des angles au moins égaux à 10°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection.

L'armature de travail comprend usuellement deux couches de travail, radialement superposées, formées de renforts métalliques non extensibles, parallèles entre eux dans chaque couche et croisés d'une couche à la suivante, en formant, avec la direction circonférentielle, des angles au plus égaux à 60°, et, de préférence, au moins égaux à 15° et au plus égaux à 45°.

De plus, pour diminuer les sollicitations mécaniques de gonflage transmises à l'armature de travail, il est connu de disposer, radialement à l'extérieur de l'armature de carcasse, une armature de frettage, ayant une rigidité en extension circonférentielle élevée. L'armature de frettage, dont la fonction est de reprendre au moins en partie les sollicitations mécaniques de gonflage, améliore également l'endurance de l'armature de sommet par une rigidification de l'armature de sommet, lorsque le pneumatique est écrasé sous une charge radiale et, en particulier, soumis à un angle de dérive autour de la direction radiale.

L'armature de frettage comprend usuellement deux couches de frettage, radialement superposées, formées de renforts métalliques, parallèles entre eux dans chaque couche et croisés d'une couche à la suivante, en formant, avec la direction circonférentielle, des angles au plus égaux à 10°. L'armature de frettage peut être positionnée radialement à l'intérieur de l'armature de travail, entre deux couches de travail de l'armature de travail, ou radialement à l'extérieur de l'armature de travail.

Parmi les couches de frettage, on distingue les couches de frettage dites à angles fermés, c'est-à-dire dont les renforts métalliques forment, avec la direction circonférentielle, des angles au moins égaux à 5° et au plus égaux à 10°, et les couches de frettage circonférentielles, plus précisément sensiblement circonférentielles, c'est-à-dire dont les renforts métalliques forment, avec la direction circonférentielle, des angles au plus égaux à 5° et pouvant être nuls. Les couches de frettage à angles fermés comprennent des renforts métalliques ayant des extrémités libres au niveau des extrémités axiales des couches de frettage. Les couches de frettage circonférentielles comprennent des renforts métalliques n'ayant pas d'extrémités libres au niveau des extrémités axiales des couches de frettage, car les couches de frettage circonférentielles sont obtenues le plus souvent par l'enroulement circonférentiel d'une nappe de renforts métalliques ou par l'enroulement circonférentiel d'un renfort métallique continu.

Par conséquent une armature de sommet usuel d'un pneumatique pour véhicule de Génie Civil comprend fréquemment six couches de sommet, réparties en deux couches de protection, deux couches de travail et deux couches de frettage. La complexité de cette armature de sommet résulte du besoin de satisfaire, en particulier, un compromis entre la capacité de porter de lourdes charges et la capacité de rouler sur des sols agressifs. Parallèlement, il existe un besoin de simplification de l'architecture du pneumatique pour réduire son coût de fabrication.

Il est connu, dans un autre domaine du pneumatique, celui des pneumatiques pour avion, également destinés à porter de lourdes charges, mais pour des roulages à forte pression et à vitesse beaucoup plus élevée, sur des sols non agressifs, d'utiliser une armature de sommet dite trancannée, et plus précisément une armature de travail trancannée. Les documents WO 2015059172, WO 2015063131, WO 2015071152, WO 2015124758 et WO2015150133 décrivent ainsi une armature de sommet, comprenant au moins un bicouche de sommet constitué au moins en partie par deux couches de sommet radialement superposées et constituées chacune par des renforts enrobés dans un matériau élastomérique. Chaque bicouche de sommet est constitué par un enroulement circonférentiel en zigzag d'une bandelette de largeur W, selon une direction circonférentielle du pneumatique et sur une surface de révolution sensiblement cylindrique positionnée à une distance radiale R de l'axe de rotation du pneumatique. La trajectoire de l'enroulement circonférentiel en zigzag est une courbe périodique ayant une période P et une amplitude L. La courbe périodique forme, avec la direction circonférentielle, un angle A mesuré au niveau des points de la courbe positionnés dans un plan équatorial passant par le milieu de la bande de roulement et perpendiculaire à l'axe de rotation. La courbe périodique s'étend sur un nombre N de périodes P réparties sur un nombre T de circonférences 2IIR. Une telle armature de sommet a l'avantage de limiter le nombre de couches de sommet individuelles et de simplifier la fabrication.

Toutefois, cette armature de sommet trancannée, pour un pneumatique d'avion, est constituée par des couches de sommet comprenant des renforts textiles, préférentiellement de type polyamide aliphatique, tel que le nylon, ou de type polyamide aromatique, tel que l'aramide, ou toute combinaison des précédents types. Or, dans le domaine du Génie Civil, compte tenu des conditions d'utilisation particulièrement sévères, l'utilisation de renforts textiles est difficilement envisageable et celle de renforts métalliques est communément admise comme une solution préférable.

Le document EP 2202095 A divulgue un pneumatique destiné à être utilisé dans des avions, des camions et d'autres applications à charge élevée et ayant une armature de sommet trancannée utilisant des renforts métalliques.

Les inventeurs se sont donc donnés pour objectif de proposer, pour un véhicule de Génie Civil, un pneumatique comprenant une armature de sommet à renforts métalliques au moins en partie trancannée, compatible avec une utilisation sous charge élevée, à pression et à vitesse modérées, et sur des sols agressifs.

Cet objectif a été atteint, selon l'invention, par un pneumatique pour véhicule de Génie Civil comprenant:

- une armature de sommet radialement intérieure à une bande de roulement et radialement extérieure à une armature de carcasse,
- l'armature de sommet comprenant au moins un bicouche de sommet constitué au moins en partie par deux couches de sommet radialement superposées et constituées chacune par des renforts enrobés dans un matériau élastomérique,
- chaque bicouche de sommet étant constitué par un enroulement circonférentiel en zigzag d'une bandelette de largeur W, selon une direction circonférentielle du pneumatique et sur une surface de révolution sensiblement cylindrique positionnée à une distance radiale R de l'axe de rotation du pneumatique,
- la trajectoire de l'enroulement circonférentiel en zigzag étant une courbe périodique ayant une période P et une amplitude L,
- la courbe périodique formant, avec la direction circonférentielle, un angle A mesuré au niveau des points de la courbe positionnés dans un plan équatorial passant par le milieu de la bande de roulement et perpendiculaire à l'axe de rotation,
- la courbe périodique s'étendant sur un nombre N de périodes P réparties sur un nombre T de circonférences 2IIR,
- la trajectoire de l'enroulement circonférentiel en zigzag générant des croisements de bandelette entre une portion de bandelette radialement extérieure et une portion de bandelette radialement intérieure,
- un croisement de bandelette étant extérieur, lorsque la portion de bandelette radialement extérieure forme, dans un plan axial et avec la direction circonférentielle, un angle B positif,
- un croisement de bandelette étant intérieur, lorsque la portion de bandelette radialement extérieure forme dans un plan axial et avec la direction circonférentielle, un angle B négatif,
- les renforts des couches de sommet étant métalliques,
- la courbe périodique de la trajectoire de l'enroulement circonférentiel en zigzag satisfaisant les relations suivantes:

$$N*(W/\sin A) = 2\Pi R*t \text{ avec } 0.6 <= t <= 1,$$

$$N*P = 2\Pi R*T,$$

- et, pour au moins 40% des croisements de bandelette (53) axialement positionnés, par rapport au plan équatorial (XZ), à une distance axiale L1 au plus égale à 0.25 fois l'amplitude L de la courbe périodique (7), la portion circulaire de bicouche (213), centrée sur le croisement de bandelette (53) et ayant un rayon égal à 2 fois la largeur W de bandelette (5), comprend Ne croisements de bandelette extérieurs et Ni croisements de bandelette intérieurs, de telle sorte que INe-Nil/(Ne+Ni) <= 0.3.

Le principe de l'invention est d'utiliser, pour au moins une partie des couches de sommet, une structure trancannée comprenant au moins un bicouche, et, plus précisément, de remplacer au moins deux couches de sommet par un bicouche de sommet, obtenu par enroulement circonférentiel en zigzag d'une bandelette, selon une direction circonférentielle du pneumatique et sur une surface de révolution.

Ce bicouche de sommet a tout d'abord la particularité d'être obtenu par le trancannage d'une bandelette comprenant des renforts métalliques, alors que le procédé de trancannage est habituellement utilisé pour des renforts textiles, beaucoup plus simples à trancanner du fait de leur plus grande déformabilité.

En outre, la courbe périodique de la trajectoire de l'enroulement circonférentiel en zigzag doit satisfaire deux relations particulières, définies entre les paramètres de ladite trajectoire et telles que précisées ci-après.

Concernant la première relation, chacune des deux couches de sommet, composant le bicouche de sommet, est constituée par la juxtaposition de N portions de bandelette, la bandelette ayant une largeur W et formant un angle A, avec la direction circonférentielle du pneumatique et dans un plan équatorial passant par le milieu de la bande de roulement et perpendiculaire à l'axe de rotation. N est le nombre de périodes P de la courbe périodique, c'est-à-dire le nombre de fois que l'on doit répéter la trajectoire de pose de la bandelette pour réaliser le bicouche de sommet. Par conséquent, la longueur circonférentielle développée d'une couche de sommet est égale à $N*(W/\sin A)$, où $W/\sin A$ est la largeur de la bandelette projetée sur la direction circonférentielle. La première relation $N*(W/\sin A)=2\Pi R*t$ avec $0.6 <= t <= 1$ traduit le fait que la longueur circonférentielle développée d'une couche de sommet est inférieure ou égale à la circonférence $2\Pi R$ de la surface cylindrique de pose de rayon R, c'est-à-dire que la juxtaposition de portions de bandelette n'est généralement pas réalisée de manière uniforme, sauf pour $t = 1$. Par juxtaposition non uniforme de portions de bandelette, on entend une juxtaposition pouvant comprendre une discontinuité ou un trou entre deux portions de bandelette adjacentes. Le coefficient t de la relation précédente est appelé taux de recouvrement, car il caractérise la plus ou moins grande quantité de trous présents dans une couche de sommet.

Concernant la deuxième relation, la longueur totale de bandelette, projetée sur la direction circonférentielle, nécessaire à la réalisation du bicouche de sommet, est égale à $N*P$, où N est le nombre de périodes P de la courbe périodique et où P est la période de la courbe périodique. La deuxième condition $N*P=2\Pi R*T$ exprime le fait que la longueur totale projetée de bandelette est égale à un multiple T de la circonférence $2\Pi R$ de la surface cylindrique de pose de rayon R. T représente le nombre de tours d'enroulement de la bandelette sur la surface cylindrique de pose de rayon R, nécessaire à la réalisation du bicouche de sommet.

Enfin, étant donné que la trajectoire de l'enroulement circonférentiel en zigzag génère des croisements de bandelette entre une portion de bandelette radialement extérieure et une portion de bandelette radialement intérieure, les inventeurs ont classé ces croisements de bandelette en croisements extérieurs et croisements intérieurs. Par définition, un croisement de bandelette est extérieur, lorsque la portion de bandelette radialement extérieure forme, dans un plan axial et avec la direction circonférentielle, un angle B positif. Un plan axial est un plan orienté, défini par une première direction circonférentielle, tangente à la surface de révolution et orientée selon le sens de roulement du pneumatique, et une deuxième direction axiale, parallèle à l'axe de rotation du pneumatique: c'est donc un plan tangent à la surface de révolution. Encore par définition, un croisement de bandelette est intérieur, lorsque la portion de bandelette radialement extérieure forme dans un plan axial et avec la direction circonférentielle, un angle B négatif.

Les inventeurs ont cherché à obtenir, au voisinage de 40% des croisements de bandelettes, positionnés dans une zone médiane de la largeur axiale du bicouche de sommet, c'est-à-dire en dehors des zones de superposition de bandelette présentes aux extrémités axiales du bicouche de sommet, un nombre de croisements intérieurs proche du nombre de croisements extérieurs, pour obtenir une homogénéité de tissage garantissant un fonctionnement mécanique homogène du bicouche de sommet. Ce but est atteint, selon les inventeurs, si, pour au moins 40% des croisements de bandelette axialement positionnés, par rapport au plan équatorial, à une distance axiale L1 au plus égale 0.25 fois l'amplitude L de la courbe périodique, c'est-à-dire en zone médiane, la portion circulaire de bicouche, centrée sur le croisement de bandelette et ayant un rayon égal à 2 fois la largeur W de bandelette, c'est-à-dire un rayon limité, comprend Ne croisements de bandelette extérieurs et Ni croisements de bandelette intérieurs, de telle sorte que $|Ne-Ni|/(Ne+Ni) <= 0.3$, ce qui garantit que les nombres de croisements de bandelette respectivement extérieurs Ne et intérieurs Ni sont proches.

Avantageusement, tout renfort métallique ayant une section circulaire de diamètre D, la largeur W de la bandelette est au moins égale à D. La bandelette, à partir de laquelle est constitué le bicouche de sommet, est au minimum constituée d'un renfort métallique unique, enrobé dans un mélange élastomérique. Le diamètre D du renfort est son diamètre d'encombrement, et non son diamètre compacté.

Encore avantageusement, la largeur W de la bandelette est au plus égale à 0.2 fois l'amplitude L de la courbe périodique. La bandelette, à partir de laquelle est constitué le bicouche de sommet, doit avoir une largeur suffisante, c'est-à-dire doit être composée d'un nombre de renforts suffisant pour permettre une réalisation du bicouche de sommet suffisamment rapide. Toutefois cette largeur doit rester limitée pour permettre l'enroulement de la bandelette sans vrillage de celle-ci au niveau des extrema de la courbe périodique, c'est-à-dire au niveau des changements de direction de la trajectoire. Le phénomène de vrillage, hors du plan de la bandelette, est en effet particulièrement sensible avec des renforts métalliques.

Avantageusement, la courbe périodique ayant des extrema et ayant un rayon de courbure R' au niveau de ses extrema, le rayon de courbure R' de la courbe périodique est au moins égal à l'amplitude L de la courbe périodique. Le rayon de courbure de la courbe périodique, minimum au niveau de ses extrema, doit avoir une valeur minimale pour permettre l'enroulement de la bandelette avec renforts métalliques sans vrillage de celle-ci au niveau des extrema, au niveau desquels la trajectoire de la bandelette change de direction.

Encore avantageusement, la courbe périodique ayant des extrema et ayant un rayon de courbure R' au niveau de ses extrema, le rayon de courbure R' de la courbe périodique est au plus égal à 7 fois l'amplitude L de la courbe périodique. Le rayon de courbure de la courbe périodique, minimum au niveau de ses extrema, doit toutefois rester limité pour permettre l'obtention d'un angle A, par rapport à la direction circonférentielle, pas trop petit, classiquement au moins égal à 15°, c'est-à-dire suffisant pour obtenir une rigidité transversale du bicouche de sommet permettant de garantir un comportement transversal correct du pneumatique.

Avantageusement, le rapport T/N est au moins égal à 0.15 et au plus égal à 1.3. Un enroulement circonférentiel en zigzag défini par un nombre N de périodes P réparties sur un nombre T de circonférences 2IIR*T, tel que le rapport T/N est compris dans l'intervalle précédent, permet d'obtenir les caractéristiques de trajectoire visées, telles que précédemment définies, à savoir un angle A suffisant et des rayons de courbure minimum R'au niveau des extrema dans les plages requises.

Préférentiellement, N et T sont des nombres entiers premiers entre eux. Le fait que N et T soient des nombres entiers premiers entre eux permet d'avoir un décalage circonférentiel de la trajectoire de la bandelette à chaque tour d'enroulement de telle sorte qu'il ne peut y avoir de superposition radiale de la trajectoire de la bandelette.

Selon un mode de réalisation préféré, les renforts métalliques des couches de sommet sont des renforts métalliques élastiques ayant un allongement structural As au moins égal à 0.5% et un module d'élasticité en extension au plus égal à 150 GPa. Les précédentes caractéristiques sont déterminées sur un renfort métallique élastique, enrobé dans un mélange élastomérique vulcanisé. Le comportement élastique des renforts métalliques, tel que précédemment défini, avec en particulier un allongement structural As au moins égal à 0.5%, facilite la réalisation du trancannage, c'est-à-dire l'enroulement en zigzag de la bandelette.

Selon une variante du mode de réalisation préféré, les renforts métalliques élastiques de la bandelette sont des câbles multi-torons de structure 1×I comprenant une unique couche de I torons enroulés en hélice, chaque toron comprenant une couche interne de J fils internes enroulés en hélice et une couche externe de K fils externes enroulés en hélice autour de la couche interne. Les câbles multi-torons sont des modes de réalisation classiques de renforts métalliques élastiques, dans le domaine du pneumatique.

Une armature de sommet comprend préférentiellement au moins deux bicouches de sommet. Sachant qu'une armature de sommet d'un pneumatique pour un véhicule de Génie Civil comprend usuellement six couches de sommet, réparties en deux couches de protection, deux couches de travail et deux couches de frettage, les inventeurs ont imaginé de remplacer les deux couches de travail par un bicouche de travail et/ou les deux couches de frettage par un bicouche de frettage et/ou les deux couches de protection par un bicouche de protection. Ainsi diverses configurations d'armature de sommet peuvent être envisagées : un bicouche de sommet combiné avec quatre couches de sommet individuelles, deux bicouches de sommet combinés avec deux couches de sommet individuelles, trois bicouches de sommet. Il est à noter qu'une armature de sommet simplifiée, avec uniquement deux bicouches de sommet, a également été envisagée par les inventeurs.

Les caractéristiques de l'invention sont illustrées par les figures 1 à 9 schématiques et non représentées à l'échelle:

- Figure 1 : Demi-coupe méridienne d'un sommet de pneumatique pour véhicule de Génie Civil selon l'invention
- Figure 2 : Vue en perspective d'un enroulement circonférentiel en zigzag d'une bandelette, selon une courbe périodique, sur une surface cylindrique de pose
- Figure 3 : Vue en plan de la trajectoire de la bandelette au bout de T=1 tour d'enroulement de la bandelette
- Figure 4 : Vue en plan de la trajectoire de la bandelette au bout de T=2 tours d'enroulement de la bandelette
- Figure 5 : Vue en plan de la trajectoire de la bandelette au bout de T=28 tours d'enroulement de la bandelette, correspondant au bicouche de sommet dans son état final
- Figure 6 : Vue en plan de la trajectoire de la bandelette au bout de T=28 tours d'enroulement de la bandelette avec localisation des croisements de bandelette dans une partie médiane
- Figure 7 : Schéma d'un croisement de bandelette extérieur
- Figure 8 : Schéma d'un croisement de bandelette intérieur
- Figure 9 : Principe de dénombrement des croisements de bandelette intérieurs et extérieurs au voisinage d'un croisement de bandelette.

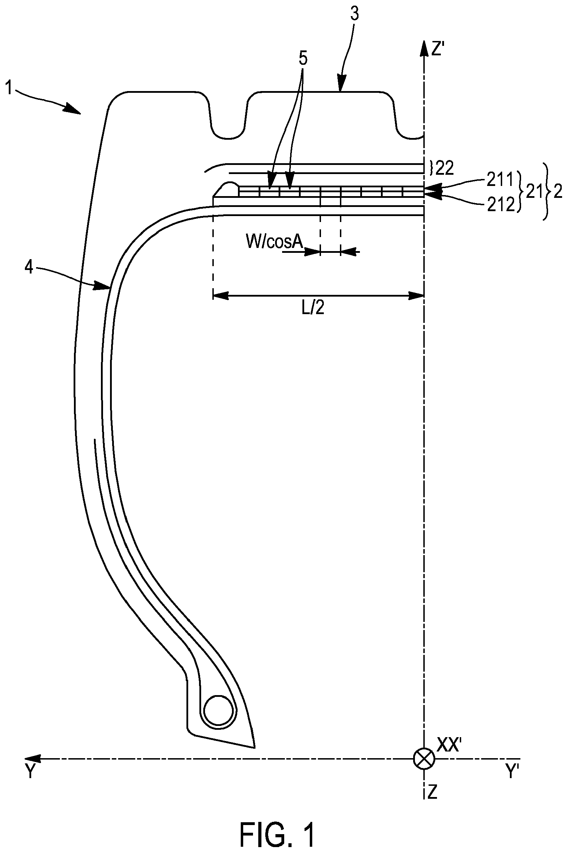

La figure 1 représente une demi-coupe méridienne, dans un plan méridien YZ passant par l'axe de rotation YY' du pneumatique, d'un pneumatique 1 pour véhicule de Génie Civil comprenant une armature de sommet 2 radialement intérieure à une bande de roulement 3 et radialement extérieure à une armature de carcasse 4. L'armature de sommet 2 comprend un bicouche de sommet 21, constitué au moins en partie de deux couches de sommet (211, 212) radialement superposées, et obtenu par l'enroulement circonférentiel en zigzag d'une bandelette de largeur W, sur une surface cylindrique de pose de rayon R (non représenté), ayant pour axe de révolution l'axe de rotation YY' du pneumatique. Dans le mode de réalisation représenté, le bicouche de sommet 21 est un bicouche de travail, radialement intérieur à une armature de protection 22 constituée de deux couches de protection. Dans le plan méridien YZ, chaque couche de sommet (211, 212) est constituée par une juxtaposition axiale de portions de bandelette 5 de largeur W/cosA, où W est la largeur (non représentée) de la bandelette 5, mesurée perpendiculairement à la ligne moyenne de la bandelette 5, et A est l'angle (non représenté) formé par la ligne moyenne de la bandelette 5, avec la direction circonférentielle XX', dans le plan équatorial XZ.

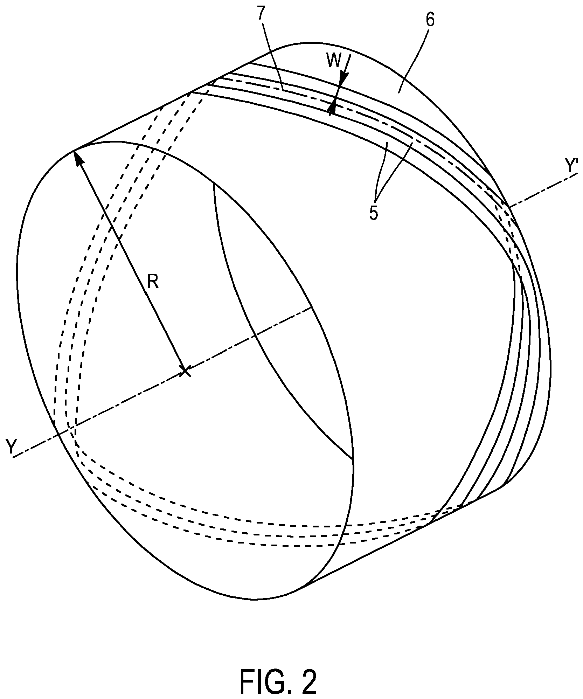

La figure 2 est une vue en perspective d'un enroulement circonférentiel en zigzag d'une bandelette 5 de largeur W, selon une courbe périodique 7, sur une surface cylindrique de pose 6, de révolution autour de l'axe de rotation YY' du pneumatique et ayant un rayon R. Cet enroulement circonférentiel en zigzag d'une bandelette 5 est constitutif d'un bicouche de sommet.

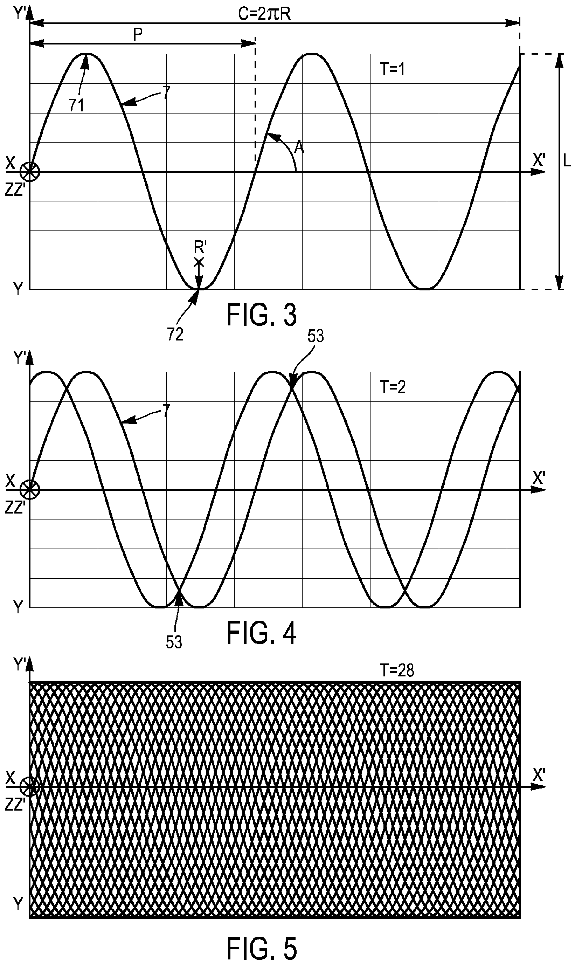

La figure 3 est une vue en plan de la trajectoire de la bandelette au bout de T=1 tour d'enroulement de la bandelette ou, plus précisément, de la fibre moyenne de la bandelette, la largeur de la bandelette n'étant pas représentée pour une meilleure lisibilité de la figure. Cette vue en plan, dans un plan XY, correspond à la surface développée de la surface cylindrique de pose, ayant une longueur égale à la circonférence $C=2\Pi R$, où R est le rayon de surface cylindrique de pose, et une largeur égale à l'amplitude L de la courbe périodique 7. La trajectoire de l'enroulement circonférentiel en zigzag est une courbe périodique 7 ayant une période P et une amplitude L. La courbe périodique 7 forme, avec la direction circonférentielle XX', un angle A mesuré au niveau des points de la courbe positionnés dans un plan équatorial XZ passant par le milieu de la bande de roulement et perpendiculaire à l'axe de rotation YY'. La courbe périodique 7 a des extrema (71, 72) et ayant un rayon de courbure R' au niveau de ses extrema (71, 72). Dans le mode de réalisation représenté, avec les choix d'angle A et de rayon de courbure R' réalisés, la période de la courbe périodique 7 s'étend sur 2.2 périodes P, sur un tour d'enroulement.

La figure 4 est une vue en plan de la trajectoire de la bandelette au bout de T=2 tours d'enroulement de la bandelette. Dans le mode de réalisation représenté, la courbe périodique 7, au second tour d'enroulement, croise la trajectoire du 1er tour d'enroulement en 5 points, créant ainsi 5 croisements de bandelette 53.

La figure 5 est une vue en plan de la trajectoire de la bandelette au bout de T=28 tours d'enroulement de la bandelette, correspondant au bicouche de sommet dans son état final. Dans le mode de réalisation représenté, le bicouche de sommet est dans son état final lorsque la courbe 7 s'étend sur un nombre N=61 de périodes P réparties sur un nombre T=28 de circonférences 2IIR.

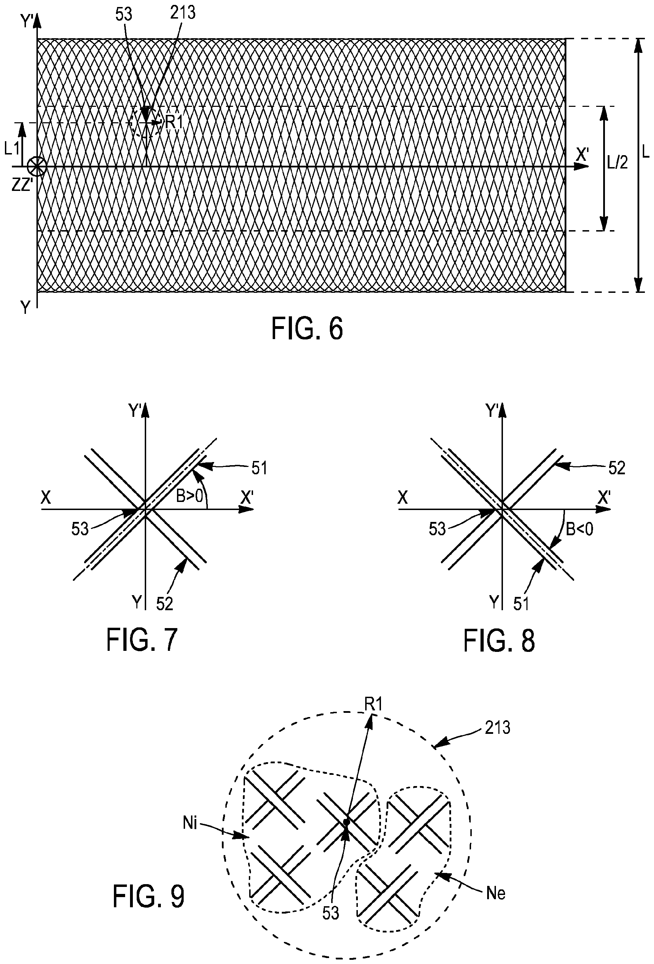

La figure 6 est une vue en plan de la trajectoire de la bandelette au bout de T=28 tours d'enroulement de la bandelette, correspondant au bicouche de sommet dans son état final, sur laquelle est représenté un exemple de portion circulaire de bicouche 213, centrée sur un croisement de bandelette 53, positionné à la distance axiale L1, et ayant un rayon R1 égal à 2 fois la largeur W de bandelette. Cette portion circulaire de bicouche 213 est un élément de référence sur lequel sont déterminés le nombre Ne croisements de bandelette extérieurs et le nombre Ni croisements de bandelette intérieurs, au voisinage du croisement de bandelette 53.

La figure 7 est un schéma d'un croisement de bandelette 53 extérieur, entre une bandelette radialement extérieure 51 et une bandelette radialement intérieure 52. Dans le cas d'un croisement de bandelette extérieur, la portion de bandelette 51 radialement extérieure forme, dans un plan axial XY et avec la direction circonférentielle XX', un angle B positif. Un plan axial XY est un plan orienté, défini par une première direction circonférentielle XX', tangente à la surface de révolution et orientée selon le sens de roulement du pneumatique, et une deuxième direction axiale YY', parallèle à l'axe de rotation du pneumatique: c'est donc un plan tangent à la surface de révolution.

La figure 8 est un schéma d'un croisement de bandelette 53 intérieur, entre une bandelette radialement extérieure 51 et une bandelette radialement intérieure 52. Dans le cas d'un croisement de bandelette intérieur, la portion de bandelette 51 radialement extérieure forme, dans un plan axial XY et avec la direction circonférentielle XX', un angle B négatif.

La figure 9 schématise le principe de dénombrement des croisements de bandelette intérieurs et extérieurs au voisinage d'un croisement de bandelette, ce dernier étant intérieur dans le cas représenté. Pour chaque croisement de bandelette 53 axialement positionné, par rapport au plan équatorial XZ, à une distance axiale L1 au plus égale à 0.25 fois l'amplitude L de la courbe périodique 7 (voir la figure 6), on définit une portion circulaire de bicouche 213, centrée sur le croisement de bandelette 53 et ayant un rayon égal à 2 fois la largeur W de bandelette 5. Puis on compte les nombres respectifs Ne de croisements de bandelette extérieurs et Ni de croisements de bandelette intérieurs, contenus dans ladite portion circulaire. Il est à noter que le croisement de bandelette 53, étant intérieur dans le cas représenté, est pris en compte dans Ni. Les paramètres de l'enroulement périodique en zigzag sont alors optimisés de telle sorte que, pour au moins 40% des croisements de bandelette sélectionnés, qu'ils soient eux-mêmes intérieurs ou extérieurs, la condition suivante est vérifiée : INe-Nil/(Ne+Ni) <= 0.3. Cette condition garantit que les nombres de croisements de bandelette respectivement extérieurs Ne et intérieurs Ni sont proches, ce critère étant, selon les inventeurs, caractéristique d'une répartition homogène des croisements de bandelette intérieurs et extérieurs, entrainant un fonctionnement mécanique homogène du bicouche de sommet.

Les inventeurs ont défini un bicouche de sommet avec trancannage optimisé, tel que défini dans l'invention, pour un pneumatique pour véhicule de Génie Civil de dimension 24.00R35.

Le pneumatique étudié comprend une armature de sommet constitué par deux bicouches de sommet, pour lesquels chacune des couches de sommet est constituée par des renforts métalliques élastiques de type câbles multi-torons.

La structure de ces câbles multi-torons est de type 1×I, comprenant une unique couche de I torons enroulés en hélice, chaque toron comprenant une couche interne de J fils internes enroulés en hélice et une couche externe de K fils externes enroulés en hélice autour de la couche interne. Dans l'exemple étudié, les câbles multi-torons utilisés ont une structure 52.26=4*(5+8)*26, c'est-à-dire sont constitués de I=4 torons, chaque toron comprenant une couche interne de J=5 fils internes et une couche externe de K=8 fils externes enroulés en hélice autour de la couche interne, les fils ayant une section de diamètre d=0.26 mm. Ces renforts ont un diamètre D égal à 3.1 mm, un module élastique en extension E égal à 70 GPa, un allongement structural As égal à 0.7%, et sont répartis axialement selon un pas axial égal à 5 mm.

Le tableau 1 ci-dessous résume les propriétés des câbles élastiques multi-torons testés :

Tableau 1

| Type de renfort | Câble 52.26 |
|---|---|
| Diamètre D du renfort | 3.1 mm |
| Nombre I de torons | 4 |
| Nombre J de fils de couche interne | 4 |
| Nombre K de fils de couche externe | 9 |
| Module d'élasticité en extension | 70 GPa |
| Allongement structural As | 0.7% |

Le bicouche de sommet est constitué par un enroulement circonférentiel en zigzag d'une bandelette de largeur W égal à 35 mm, selon une direction circonférentielle XX' du pneumatique et sur une surface de révolution sensiblement cylindrique positionnée à une distance radiale R égale à 985 mm de l'axe de rotation YY' du pneumatique, cette distance radiale R étant mesurée dans un plan équatorial XZ passant par le milieu de la bande de roulement et perpendiculaire à l'axe de rotation YY'. La trajectoire de l'enroulement circonférentiel en zigzag est une courbe périodique ayant une période P égale à 2841 mm et une amplitude L égale à 400 mm. La courbe périodique forme, avec la direction circonférentielle XX', un angle A égal à 24°, mesuré au niveau des points de la courbe positionnés dans le plan équatorial XZ. La courbe périodique s'étend sur un nombre N, égal à 61, de périodes P réparties sur un nombre T, égal à 28, de circonférences 2ΠR. La courbe périodique de la trajectoire de l'enroulement circonférentiel en zigzag satisfait les relations suivantes N*(W/sinA)=2ΠR*t=5.3 m avec t=0.85, et N*P=2ΠR*T=173.3 m.

Le tableau 2 ci-dessous résume les propriétés de la courbe périodique de l'enroulement circonférentiel en zigzag de bandelette, constituant le bicouche de sommet :

Tableau 2

| Dimension | 24.00R35 |
|---|---|
| Rayon R de la surface cylindrique au centre | 985 mm |
| Largeur W de bandelette | 35 mm |
| Angle au centre A de la courbe périodique | 24° |
| Rayon de courbure R' au niveau des extrema | 995 mm |
| Période P de la courbe périodique | 2841 mm |
| Amplitude L de la courbe périodique | 400 mm |
| Nombre N de périodes P | 61 |
| Nombre de tours T d'enroulement | 28 |
| Ratio T/N | 0.46 |
| Taux de recouvrement t du trancannage | 0.85 |

Les inventeurs ont vérifié que, pour 58% des croisements de bandelette axialement positionnés, par rapport au plan équatorial XZ, à une distance axiale L1 au plus égale à 100 mm (= 0.25 *L), la portion circulaire de bicouche, centrée sur le croisement de bandelette et ayant un rayon R1 égal à 70 mm (= 2*W) comprend Ne croisements de bandelette extérieurs et Ni croisements de bandelette intérieurs, de telle sorte que |Ne-Ni|/(Ne+Ni)<= 0.3.

Cette invention, étudiée dans le domaine des pneumatiques pour véhicule de Génie Civil, peut être appliquée à tout pneumatique comprenant une armature de sommet comprenant au moins deux couches de sommet métalliques, tel que par exemple un pneumatique pour véhicule Poids Lourd.

## Revendications

1.    - Pneumatique (1) pour véhicule de Génie Civil comprenant:

- une armature de sommet (2) radialement intérieure à une bande de roulement (3) et radialement extérieure à une armature de carcasse (4),
- l'armature de sommet (2) comprenant au moins un bicouche de sommet (21) constitué au moins en partie par deux couches de sommet (211, 212) radialement superposées et constituées chacune par des renforts enrobés dans un matériau élastomérique,
- chaque bicouche de sommet (21) étant constitué par un enroulement circonférentiel en zigzag d'une bandelette (5) de largeur W, selon une direction circonférentielle (XX') du pneumatique et sur une surface de révolution sensiblement cylindrique (6) positionnée à une distance radiale R de l'axe de rotation (YY') du pneumatique,
- la trajectoire de l'enroulement circonférentiel en zigzag étant une courbe périodique (7) ayant une période P et une amplitude L,
- la courbe périodique (7) formant, avec la direction circonférentielle (XX'), un angle A mesuré au niveau des points de la courbe positionnés dans un plan équatorial (XZ) passant par le milieu de la bande de roulement et perpendiculaire à l'axe de rotation (YY'),
- la courbe périodique (7) s'étendant sur un nombre N de périodes P réparties sur un nombre T de circonférences 2ΠR,
- la trajectoire de l'enroulement circonférentiel en zigzag générant des croisements de bandelette (53) entre une portion de bandelette radialement extérieure (51) et une portion de bandelette radialement intérieure (52),
- un croisement de bandelette (53) étant extérieur, lorsque la portion de bandelette radialement extérieure (51) forme, dans un plan axial (XY) et avec la direction circonférentielle (XX'), un angle B positif,
- un croisement de bandelette (53) étant intérieur, lorsque la portion de bandelette radialement extérieure (51) forme dans un plan axial (XY) et avec la direction circonférentielle (XX'), un angle B négatif, les renforts des couches de sommet (211, 212) étant métalliques, **caractérisé en ce que** la courbe périodique (7) de la trajectoire de l'enroulement circonférentiel en zigzag satisfait les relations suivantes :

$$N*(W/\sin A)=2\Pi R*t$$

avec 0.6<=t<=1,

$$N*P=2\Pi R*T,$$

**et en ce que**, pour au moins 40% des croisements de bandelette (53) axialement positionnés, par rapport au plan équatorial (XZ), à une distance axiale L1 au plus égale à 0.25 fois l'amplitude L de la courbe périodique (7), la portion circulaire de bicouche (213), centrée sur le croisement de bandelette (53) et ayant un rayon R1 égal à 2 fois la largeur W de bandelette (5), comprend Ne croisements de bandelette extérieurs et Ni croisements de bandelette intérieurs, de telle sorte que |Ne-Ni|/(Ne+Ni)<= 0.3.

2.    - Pneumatique (1) selon la revendication 1, tout renfort métallique ayant une section circulaire de diamètre D **dans lequel** la largeur W de la bandelette (5) est au moins égale à D.

3.    - Pneumatique (1) selon l'une quelconque des revendications 1 ou 2, **dans lequel** la largeur W de la bandelette (5) est au plus égale à 0.2 fois l'amplitude L de la courbe périodique (7).

4.    - Pneumatique (1) selon l'une quelconque des revendications 1 à 3, la courbe périodique (7) ayant des extrema (71, 72) et ayant un rayon de courbure R' au niveau de ses extrema (71, 72), **dans lequel** le rayon de courbure R' de la courbe périodique (7) est au moins égal à l'amplitude L de la courbe périodique (7).

**5.** - Pneumatique (1) selon l'une quelconque des revendications 1 à 3, la courbe périodique (7) ayant des extrema (71, 72) et ayant un rayon de courbure R' au niveau de ses extrema (71, 72), **dans lequel** le rayon de courbure R' de la courbe périodique (7) est au plus égal à 7 fois l'amplitude L de la courbe périodique (7).

**6.** - Pneumatique (1) selon l'une quelconque des revendications 1 à 5, **dans lequel** le rapport T/N est au moins égal à 0.15 et au plus égal à 1.3.

**7.** - Pneumatique (1) selon l'une quelconque des revendications 1 à 6, **dans lequel** N et T sont des nombres entiers premiers entre eux.

**8.** - Pneumatique (1) selon l'une quelconque des revendications 1 à 7, **dans lequel** les renforts métalliques des couches de sommet (211, 212) sont des renforts métalliques élastiques ayant un allongement structural As au moins égal à 0.5% et un module d'élasticité en extension au plus égal à 150 GPa.

**9.** - Pneumatique (1) selon la revendication 8, **dans lequel** les renforts métalliques élastiques de la bandelette (5) sont des câbles multi-torons de structure 1×I comprenant une unique couche de I torons enroulés en hélice, chaque toron comprenant une couche interne de J fils internes enroulés en hélice et une couche externe de K fils externes enroulés en hélice autour de la couche interne.

**10.** - Pneumatique (1) selon l'une quelconque des revendications 1 à 9, **dans lequel** l'armature de sommet (2) comprend au moins deux bicouches de sommet (21).


**Patentansprüche**

**1.** Reifen (1) für ein Tiefbaufahrzeug, umfassend:

- eine Scheitelbewehrung (2) radial innerhalb eines Laufstreifens (3) und radial außerhalb einer Karkassenbewehrung (4),
- wobei die Scheitelbewehrung (2) mindestens eine Scheiteldoppellage (21) umfasst, die mindestens zum Teil aus zwei Scheitellagen (211, 212) besteht, die radial übereinanderliegen und jeweils aus Festigkeitsträgern bestehen, die in ein Elastomermaterial eingebettet sind,
- wobei jede Scheiteldoppellage (21) aus einer zickzackförmigen Umfangswicklung eines Streifens (5) mit der Breite W besteht, entlang einer Umfangsrichtung (XX') des Reifens und auf einer im Wesentlichen zylindrischen Rotationsfläche (6), die in einem radialen Abstand R von der Drehachse (YY') des Reifens positioniert ist,
- wobei die Bahn der zickzackförmigen Umfangswicklung eine periodische Kurve (7) ist, die eine Periode P und eine Amplitude L hat,
- wobei die periodische Kurve (7) mit der Umfangsrichtung (XX') einen Winkel A bildet, der an Punkten der Kurve gemessen wird, die in einer Äquatorialebene (XZ) liegen, die durch die Mitte des Laufstreifens und senkrecht zur Drehachse (YY') verläuft,
- wobei die periodische Kurve (7) sich über eine Anzahl N von Perioden P erstreckt, die über eine Anzahl T von Umfängen 2ΠR verteilt sind,
- wobei die Bahn der zickzackförmigen Umfangswicklung Streifenkreuzungen (53) zwischen einem radial äußeren Streifenabschnitt (51) und einem radial inneren Streifenabschnitt (52) erzeugt,
- wobei die Streifenkreuzung (53) außen ist, wenn der radial äußere Streifenabschnitt (51) in einer axialen Ebene (XY) und mit der Umfangsrichtung (XX') einen positiven Winkel B bildet,
- wobei die Streifenkreuzung (53) innen ist, wenn der radial äußere Streifenabschnitt (51) in einer axialen Ebene (XY) und mit der Umfangsrichtung (XX') einen negativen Winkel B bildet,
wobei die Festigkeitsträger der Scheitellagen (211, 212) metallisch sind,
**dadurch gekennzeichnet, dass** die periodische Kurve (7) der Bahn der zickzackförmigen Umfangswicklung die folgenden Gleichungen erfüllt:

$$N*(W/sinA)=2\Pi R*t \text{ mit } 0,6<=t<=1,$$

$$N*P=2\Pi R*T,$$

und dass, bei mindestens 40 % der Streifenkreuzungen (53), die in Bezug auf die Äquatorialebene (XZ) in einem axialen Abstand L1 von höchstens dem 0,25-Fachen der Amplitude L der periodischen Kurve (7) axial positioniert sind, der kreisförmige Doppellagenabschnitt (213), der auf die Streifenkreuzung (53) zentriert ist und einen Radius R1 gleich dem 2-Fachen der Breite W des Streifens (5) hat, Ne äußere Streifenkreuzungen und Ni innere Streifenkreuzungen umfasst, so dass |Ne-Ni|/(Ne+Ni)<= 0,3.

2. Reifen (1) nach Anspruch 1, wobei jeder metallische Festigkeitsträger einen kreisförmigen Querschnitt mit dem Durchmesser D hat, wobei die Breite W des Streifens (5) mindestens gleich D ist.

3. Reifen (1) nach einem der Ansprüche 1 oder 2, wobei die Breite W des Streifens (5) höchstens das 0,2-Fache der Amplitude L der periodischen Kurve (7) beträgt.

4. Reifen (1) nach einem der Ansprüche 1 bis 3, wobei die periodische Kurve (7) Extrema (71, 72) hat und einen Krümmungsradius R' an ihren Extrema (71, 72) hat, wobei der Krümmungsradius R' der periodischen Kurve (7) mindestens gleich der Amplitude L der periodischen Kurve (7) ist.

5. Reifen (1) nach einem der Ansprüche 1 bis 3, wobei die periodische Kurve (7) Extrema (71, 72) hat und einen Krümmungsradius R' an ihren Extrema (71, 72) hat, wobei der Krümmungsradius R' der periodischen Kurve (7) höchstens das 7-Fache der Amplitude L der periodischen Kurve (7) beträgt.

6. Reifen (1) nach einem der Ansprüche 1 bis 5, wobei das Verhältnis T/N mindestens 0,15 und höchstens 1,3 beträgt.

7. Reifen (1) nach einem der Ansprüche 1 bis 6, wobei N und T teilerfremde ganze Zahlen sind.

8. Reifen (1) nach einem der Ansprüche 1 bis 7, wobei die metallischen Festigkeitsträger der Scheitellagen (211, 212) elastische metallische Festigkeitsträger sind, die eine strukturelle Längung As von mindestens 0,5 % und einen Elastizitätsmodul bei Dehnung von höchstens 150 GPa haben.

9. Reifen (1) nach Anspruch 8, wobei die elastischen metallischen Festigkeitsträger des Streifens (5) mehrlitzige Seile mit dem Aufbau I×I sind, umfassend eine einzige Lage aus I Litzen, die schraubenlinienförmig gewunden sind, wobei jede Litze eine innere Lage aus J inneren Drähten umfasst, die schraubenlinienförmig gewunden sind, und eine äußere Lage aus K Drähten, die schraubenlinienförmig um die innere Lage gewunden sind.

10. Reifen (1) nach einem der Ansprüche 1 bis 9, wobei die Scheitelbewehrung (2) mindestens zwei Scheiteldoppellagen (21) umfasst.

## Claims

1. Tyre (1) for a civil engineering vehicle, comprising:

   - a crown reinforcement (2), radially on the inside of a tread (3) and radially on the outside of a carcass reinforcement (4),
   - the crown reinforcement (2) comprising at least a crown bilayer (21) made up at least partially of two radially superimposed crown layers (211, 212), each made up of reinforcers coated in an elastomeric material,
   - each crown bilayer (21) being made up of a circumferential zigzag winding of a strip (5) of width W, in a circumferential direction (XX') of the tyre and on a substantially cylindrical surface of revolution (6) positioned at a radial distance R from the axis of rotation (YY') of the tyre,
   - the trajectory of the circumferential zigzag winding being a periodic curve (7) having a period P and an amplitude L,
   - the periodic curve (7) forming, with the circumferential direction (XX'), an angle A measured at the points on the curve positioned in an equatorial plane (XZ) passing through the centre of the tread and perpendicular to the axis of rotation (YY'),
   - the periodic curve (7) extending over a number N of periods P distributed over a number T of circumferences 2ΠR,
   - the trajectory of the circumferential zigzag winding generating strip crossovers (53) between a radially outer portion of strip (51) and a radially inner portion of strip (52),
   - a strip crossover (53) being outer when the radially outer portion of strip (51) forms a positive angle B with the circumferential direction (XX') in an axial plane (XY),

- a strip crossover (53) being inner when the radially outer portion of strip (51) forms a negative angle B with the circumferential direction (XX') in an axial plane (XY),

**characterized in that** the crown layer reinforcers (211, 212) are made of metal, **in that** the periodic curve (7) of the trajectory of the circumferential zigzag winding satisfies the following relations:

$$N*(W/\sin A)=2\Pi R*t,$$

where 0.6<=t<=1,

$$N*P=2\Pi R*T,$$

 **and in that,** for at least 40% of the strip crossovers (53) axially positioned, relative to the equatorial plane (XZ), at an axial distance L1 equal to not more than 0.25 times the amplitude L of the periodic curve (7), the circular bilayer portion (213) centred on the strip crossover (53) and having a radius R1 equal to twice the width W of a strip (5), comprises Ne outer strip crossovers and Ni inner strip crossovers, such that |Ne-Ni|/(Ne+Ni)<= 0.3.

2. Tyre (1) according to Claim 1, any metal reinforcer having a circular cross section of diameter D, **wherein** the width W of the strip (5) is at least equal to D.

3. Tyre (1) according to any of Claims 1 or 2, **wherein** the width W of the strip (5) is equal to not more than 0.2 times the amplitude L of the periodic curve (7).

4. Tyre (1) according to any of Claims 1 to 3, the periodic curve (7) having extrema (71, 72) and having a radius of curvature R' at its extrema (71, 72), **wherein** the radius of curvature R' of the periodic curve (7) is at least equal to the amplitude L of the periodic curve (7).

5. Tyre (1) according to any of Claims 1 to 3, the periodic curve (7) having extrema (71, 72) and having a radius of curvature R' at its extrema (71, 72), **wherein** the radius of curvature R' of the periodic curve (7) is at least equal to 7 times the amplitude L of the periodic curve (7).

6. Tyre (1) according to any of Claims 1 to 5, **wherein** the ratio T/N is at least equal to 0.15 and at most equal to 1.3.

7. Tyre (1) according to any of Claims 1 to 6, **wherein** N and T are whole numbers that are prime between each other.

8. Tyre (1) according to any of Claims 1 to 7, **wherein** the metal reinforcers of the crown layers (211, 212) are elastic metal reinforcers having a structural elongation As at least equal to 0.5% and a tensile modulus of elasticity of not more than 150 GPa.

9. Tyre (1) according to Claim 8, **wherein** the elastic metal reinforcers of the strip (5) are multi strand ropes of structure 1×I comprising a single layer of I strands wound in a helix, each strand comprising an internal layer of J internal threads wound in a helix and an external layer of K external threads wound in a helix around the internal layer.

10. Tyre (1) according to any of Claims 1 to 9, **wherein** the crown reinforcement (2) comprises at least two crown bilayers (21).

FIG. 1

FIG. 2

FIG. 3

FIG. 4

FIG. 5

FIG. 6

FIG. 7

FIG. 8

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5843583 A
- WO 2005014925 A
- WO 2007090603 A
- WO 2015059172 A
- WO 2015063131 A
- WO 2015071152 A
- WO 2015124758 A
- WO 2015150133 A
- EP 2202095 A